(19) Europäisches Patentamt
European Patent Office
Office européen des brevets

(11) **EP 1 022 398 B1**

(12) **EUROPÄISCHE PATENTSCHRIFT**

(45) Veröffentlichungstag und Bekanntmachung des Hinweises auf die Patenterteilung:
**06.04.2005  Patentblatt 2005/14**

(51) Int Cl.7: **E03C 1/10**

(21) Anmeldenummer: **00101050.3**

(22) Anmeldetag: **20.01.2000**

(54) **Systemtrenner**

Backflow preventer

Dispositif anti-retour

(84) Benannte Vertragsstaaten:
**AT BE CH CY DE DK ES FI FR GB GR IE IT LI LU MC NL PT SE**

(30) Priorität: **22.01.1999  DE 19902574**

(43) Veröffentlichungstag der Anmeldung:
**26.07.2000  Patentblatt 2000/30**

(73) Patentinhaber: **Vollmer Ingenieurbüro**
**74847 Obrigheim (DE)**

(72) Erfinder: **Vollmer, Rudolf, Dipl.-Ing. (FH)**
**74821 Mosbach (DE)**

(56) Entgegenhaltungen:
**CH-A- 572 182       DE-A- 2 751 468**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft einen Systemtrenner nach dem Gattungsbegriff der unabhängigen Patentansprüche.

Ein Systemtrenner ist eine Sicherungsarmatur, die in eine Trinkwasserleitung eingebaut wird, um ein Rückfließen von Nichttrinkwasser in die Trinkwasserleitung zu verhindern. Der System - trenner besteht in bekannter Weise aus drei in Fließrichtung druckreduzierten Zonen, Eingangsdruck- Mittelkammerdruck- und Ausgangsdruckzone. Die Mittelkammerdruckzone wird zur Eingangsdruckzone und zur Ausgangsdruckzone durch jeweils einen federbelasteten Rück-flußverhinderer abgegrenzt. Treten in einem evtl. Störfall Rückflußbedingungen auf, so schließen die beiden Rückflußverhinderer und beim Unterschreiten eines vorbestimmten Differenzdruckes zwischen Eingangskammer und Mittelkammer öffnet das Ablaßventil und belüftet die Mittelkammer.

Ein derartiger Systemtrenner ist beispielsweise durch die DE 2751468 bereits bekannt.

Bei dieser Armatur wird die Eingangskammer durch ein einerseits geschlossenes Rohr, welches gegen eine vorgespannte Druckfeder axial verschiebbar ist, zur Mittelkammer hin abgedichtet und das gegenüber liegende offene Ende des Rohres bildet zusammen mit dem im Gehäuse vorgesehenen Ventilsitz das zur Belüftung der Mittelkammer notwendige Ablaßventil.

Diese Ausführung zeigt zwar einen einfachen Aufbau, hat jedoch den Nachteil, daß das rohrförmige Absperrorgan des Ablaßventiles in geschlossener Stellung des Ablaßventiles nur noch auf den statischen Druck innerhalb des Systems reagieren kann. Das bedeutet, daß in Anlagen, in denen ein Gegendruck sich aufbauen kann, diese Armatur keine Sicherheit gegen Rückfließen bietet.Der Einsatzbereich ist daher in den bestehenden Normen auf ein niedrigeres Absicherungsniveau beschränkt und damit nicht universell einsetzbar.Bei einer weiteren Armatur nach der CH PS 572 182, bei der ein topfförmiges Absperrorgan mit radialen Durchbrüchen und mit einem Rückflußverhinderer versehen ist, wird das Ablaßventil zwar vom Differenzdruck zwischen Eingangs-und Mitteldruck gesteuert, aber das als Topfboden ausgebildete Ablaßventil ist nicht druckentlastet, so daß zur Steuerung des Ablaßventiles zusätzlich eine großflächige Membrane zwischen Eingangsdruck-und Mitteldruckkammer notwendig ist. Diese Membrane bedingt ein unnötig großes Armaturengehäuse und stellt darüber- hinaus bei einer Beschädigung ein zusätzliches Sicherheitsrisiko gegen Rückfließen dar.

Ein weiterer Nachteil der bekannten Systemtrenner ist der ständige Wasserlust bei Nulldurchfluß und eingangseitigen Druckschwankungen.

Zur Lösung dieses Problems wurde gemäß der DE PS 42 04 386 C2 ein Differenzdruckstabilisator vorgeschlagen, der entweder in einem eigenen Gehäuse außerhalb des Systemtrenners zwischen zwei Druckentnahmestutzen oder in die Trennwand zwischen Eingangs- und Mittelkammer eingebaut ist. Durch eine zweite federbelastete Membrane wird dabei sichergestellt, daß die Belüftung der Mittelkammer bei einem vorbestimmten stat. Druck in der Mittelkammer erfolgt. Diese Lösung findet aufgrund der sperrigen Bauweise und aus Kostengründen keine praktische Anwendung.

Es ist daher Aufgabe der vorliegenden Erfindung, einen Systemtrenner der eingangs genannten Art so auszubilden, daß die Armatur durch ein differenzdruckgesteuertes Ablaßventil universell einsetzbar, einfach im Aufbau und unter Verzicht auf eine großflächige Steuermembrane kostengünstig herstellbar ist.

Die Lösung dieser Aufgabe gelingt gemäß den kennzeichnenden Merkmalen der unabhängigen Patentansprüche wobei die Lösung nach dem unabhängigen Anspruch 5 den zusätzlichen Vorteil einer Differenzdruckstabilisierung besitzt und bei Eingangsdruckschwanhungen den ständigen wasserverlust verhindert. Weitere vorteilhafte Ausgestaltungen des erfindungsgemäßen Systemtrenners sind den abhängigen Ansprüchen entnehmbar.

Anhand der in den Figuren 1; 2 und 3 dargestellten Ausführungsbeispiele wird die Erfindung nachfolgend näher erläutert. Es zeigen:

> Fig. 1 Einen Systemtrenner mit innenliegender Feder ohne Stellungsanzeige.
> Fig. 2 Einen Systemtrenner mit außenliegender Feder und Stellungsanzeige.
> Fig. 3 Einen Systemtrenner mit Differenzdruckstabilisator und Ansprechdruckbegrenzer.

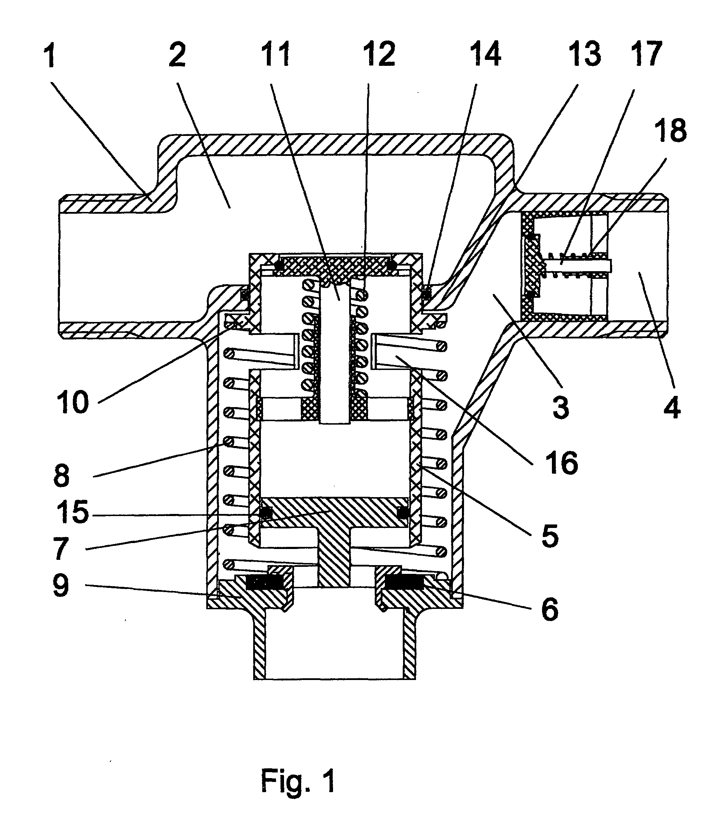

Gemäß Fig.1 besteht der Systemtrenner aus dem Gehäuse **1** mit der Eingangskammer **2**, der Mittelkammer **3** und der Ausgangskammer **4**.Das rohrförmige Absperrorgan **5** bildet zusammen mit dem Ventilsitz **6** und dem Entlastungskolben **7** das Ablaßventil **5, 7**. Die Sollwertfeder **8** stützt sich einerseits auf dem Gehäuseboden **9** und andererseits auf dem Bund **10** des Absperrorganes **5** ab. Die Stirnseite des Absperrorganes **5** ist durch den eingangsseitigen Rückflußverhinderer **11** mittels der Druckfeder **12** verschlossen. Das Absperrorgan **5** ist axial gegen die Sollwertfeder **8** verschiebbar angeodnet, wobei die obere Führung in der Gehäusewand **13**, abgedichtet durch das Dichtelement **14**, und die untere Führung über den Entlastungskolben **7**, abgedichtet durch das Dichtelement **15**, erfolgt. Das Innere des rohrförmigen Absperrorganes **5** ist über die radialen Durchbrüche **16** mit der Mittelkammer **3** hydraulisch verbunden. Der ausgangseitige Rückflußverhinderer **17** trennt die Ausgangskammer **4** von der Mittelkammer **3**.

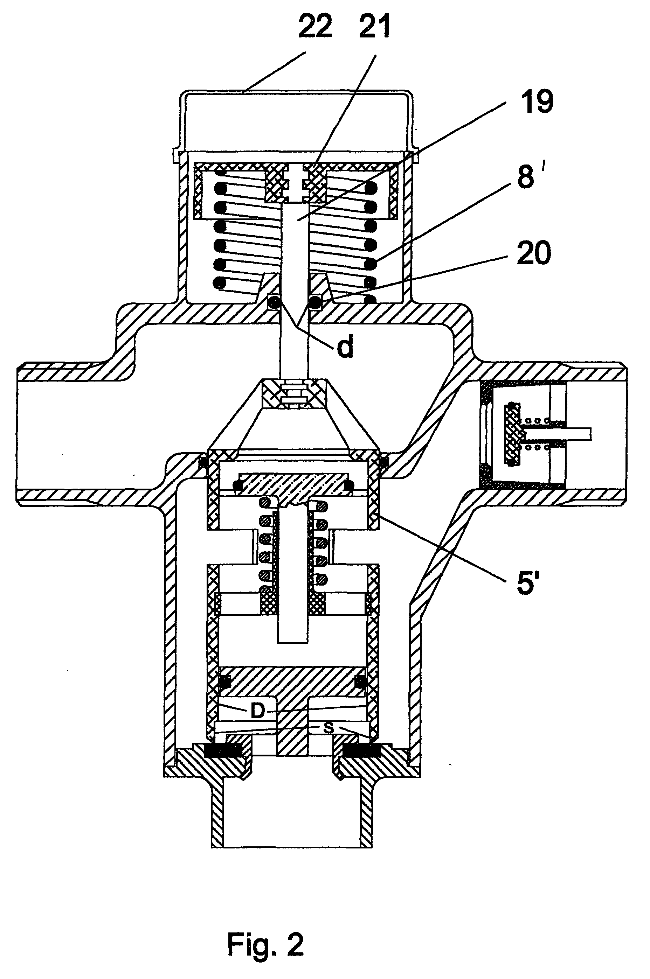

Fig. 2 zeigt einen Systemtrenner in Durchflußstellung, der neben den aus Fig 1 bekannten Bauelementen über eine Stellungsanzeige **21, 22** des Absperrorganes **5'** verfügt. Diese Stellungsanzeige besteht aus einem durchsichtigen Deckel **22** einem Anzeigeteller **21**, der Verbindunungsstange **19** und der nach außen verlegten Sollwertfeder **8'**. Die Dichtung **20** dichtet die Verbindungsstange **19** an der Gehäusedurchführung ab. Durch die Gehäusedurchführung der Verbindungsstange **19** durch das Gehäuse **1** verringert sich die vom Eingangsdruck beaufschlagte Fläche um den Wert entsprechend dem Durchmesser **d** an der Gehäusedurchführung. Um dieses Ungleichgewicht auszugleichen wird der Sitzdurchmesser **S** größer als der Kolbendurchmesser **D** nach der Formel: $S = \sqrt{d^2 + D^2}$ gewählt.

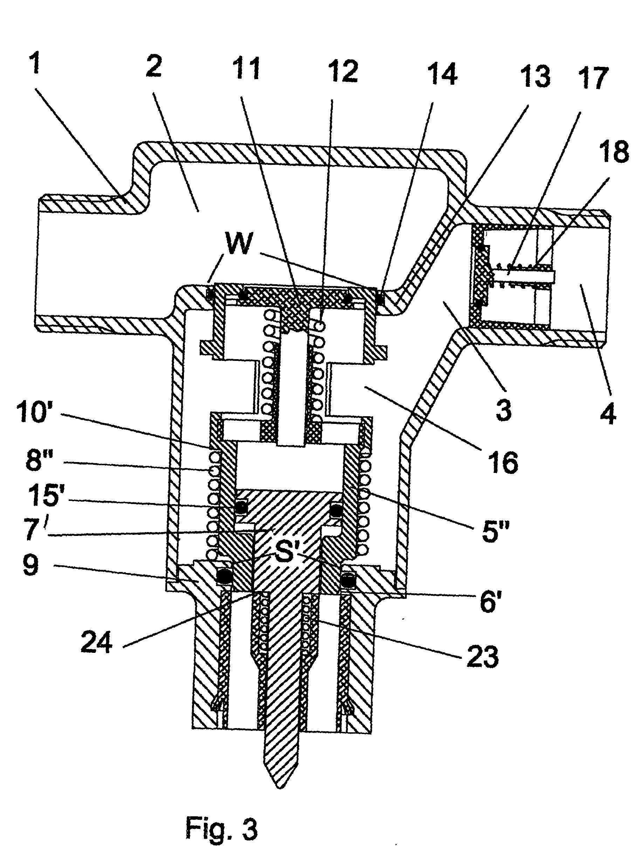

Fig. 3 zeigt einen Systemtrenner mit integriertem Differenzdruckstabilisator und Ansprechdruckbegrenzer.

Anhand der Fig. 1, Fig. 2 und Fig. 3 wird die Funktion des Systemtrenners erklärt. Das Wasser füllt zunächst die Eingangskammer **2** des Systemtrenners auf. Steigt der Eingangsdruck über den durch die Sollwertfeder **8**, **8'**, **8''** vorbestimmten Druck an, bewegt sich das Absperrorgan **5**, **5'**,**5''** gegen den Ventilsitz **6**, **6'** und dichtet die Mittelkammer **3** zur Atmosphäre hin ab. Nach weiterem Druckanstieg öffnet der Eingangsrückflußverhinderer **11** und füllt jetzt die Mittelkammer **3** auf.

Steigt der Druck in der Mittelkammer **3** nur geringfügig an, öffnet aufgrund der niedrigen Federvorspannung des Ausgangsrückflußverhinderers **17**,**18** dieser den Zugang zur Ausgangskammer **4**.

Jetzt fließt das Wasser mit einem Druckgefälle von der Eingangskammer **2** über die Mittelkammer **3** zur Ausgangskammer **4** und von dort aus über ein nicht dargestelltes Rohrsystem dem Verbraucher zu. Wird der Verbrauch gedrosselt oder ganz abgesperrt, dann gehen der Eingangsrückflußverhinderer **11** und der Ausgangsrückflußverhinderer **17** in Schließstellung; hierbei bleibt das durch die Druckfedern **12** und **18** vorbestimmte Druckgefälle aufrechterhalten und dadurch das Ablaßventil **5**, **6**; **5' 6'**,**7** geschlossen. Ist im Störfall der ausgangsseitige Rückflußverhinderer **17** undicht, steigt der Druck in der Mittelkammer **3** an, das Druckgefälle zwischen Eingangskammer **2** und Mittelkammer **3** verringert sich und die Sollwerfeder **8, 8', 8''** öffnet das Ablaßventil **5, 6; 5', 6,' 7** und leitet das durch den undichten Ausgangsrückflußverhinderer **17** ankommende Wasser über das Ablaßventil **5, 6; 5', 6'**, **7** gefahrlos einem nicht näher dargestellten Entwässerungsgegenstand zu. Fällt bei Nulldurchfluß der Eingangsdruck, so verringert sich ebenfalls der Differenzdruck zwischen Eingangskammer **2** und Mittelkammer **3**, das Ablaßventil **5, 6; 5', 6', 7** öffnet bis der erforderliche Differenzdruck wieder hergestellt ist; dabei führen Eingangsdruckschwankungen zu einem ständigen Wasserverlust.

Die Fig. 2 zeigt einen Systemtrenner in Durchflußstellung gleicher Funktion, der mit einer zusätzlichen Stellungsanzeige **21**, **22** zur einfacheren Betriebsüberwachung versehen ist.

Die Fig. 3 zeigt einen Systemtrenner wie vorbeschrieben, jedoch mit einem integrierten Differenzdruckstabilisator und einem Ansprechdruckbegrenzer. Nachfolgend werden die Funktionen des Differenzdruckstabilisators und des Ansprechdruckbegrenzers näher beschrieben.

Der Systemtrenner gemäß Fig.3 unterscheidet sich von den Systemtrennern gemäß Fig.1 und Fig. 2 durch das als Stufenkolben ausgebildete rohrförmige Absperrorgan **5''**, das radial dichtend in den Ventilsitz **6'** eintaucht, wobei der Durchmesser **S'** des Ventisitzes **6'** wesentlich kleiner als der Durchmesser **W** des Durchbruches in der Gehäusewand **13** ausgeführt ist. Der Entlastungskolben **7'** ist begrenzt axial beweglich und stützt sich zur Atmosphäre hin auf der Druckfeder **23** und nach dem Überschreiten eines vorbestimmten Mittelkammerdruckes auf dem Anschlag **24** ab. Das als Stufenkolben ausgebildete Absperrorgan **5''** wirkt dabei auf den Differenzdruck stabilisierend in der Weise, daß es sich bei Nulldurchfluß und fallendem Eingangsdruck durch die Wirkung der Sollwertfeder **8''** in Richtung Eingangskammer bewegt und dadurch eine Druckabsenkung in der allseits verschlossenen Mittelkammer **3** bewirkt, bis das Gleichgewicht zwischen Vorspannkraft der Sollwertfeder **8''** und dem Differenzdruck auf die Stirnfläche des Absperrorganes **5''** wieder hergestellt ist. Der Entlastungskolben **7'** übernimmt zusätzlich die Funktion des Ansprechdruckbegrenzers in der Weise, daß der Entlastungskolben **7'** durch die Wirkung der Druckfeder **23** nach Unterschreiten eines vorbestimmten stat. Druckes in die Mittelkammer **3** gedrückt wird und damit die durch den Stufenkolbeneffekt bedingte Druckabsenkung in der Mittelkammer begrenzt und damit das Ablaßventil **5''**, **6'**, **7'** zum Ansprechen veranläßt.

## Patentansprüche

1. Systemtrenner mit drei in einem Gehäuse (1) in Fließrichtung druckreduzierten Zonen, wobei eine Mitteldruckzone (3) zu einer Eingangsdruckzone (2) und zu einer Ausgangsdruckzone (4) durch Rückflußverhinderer (11, 17) abgegrenzt und durch ein von der Druckdifferenz zwischen Eingangs und Mittelkammerdruck gesteuertes Ablassventil (5, 5', 6, 7) entleert und belüftet wird, ein rohrförmig ausgebildetes Absperrorgan (5, 5') des Ablassventils (5, 5', 6, 7) in einem Durchbruch in einer die Trennung zwischen Eingangs- und Mitteldruckzone bildenden Gehäusewand (13) axial verschiebbar angeordnet ist und die zum Eingangsdruck weisende Stirnseite des rohrförmigen Absperrorgans (5, 5') durch einen mit einer Feder (12) vorgespannten Rückflußverhinderer (11) verschlossen und in Fließrichtung dahinter mit radialen Durchbrüchen (16) versehen ist, **dadurch gekennzeichnet, dass** das rohrförmige Absperrorgan (5, 5') durch einen gegenüber dem Gehäuseboden (9) feststehenden Entlastungskolben (7) des Ablassventils (5, 5', 6, 7) dichtend geführt ist, wobei dieser Kolbenin dem rohrförmigen Absperrorgan (5, 5') in Fließrichtung hinter den radialen Durchbrüchen (16) angeordnet ist und gleichzeitig zur Druckentlastung des Ablassventils (5, 5', 6, 7) dient.

2. Systemtrenner nach Anspruch 1, **dadurch gekennzeichnet, dass** die Soilwertfeder (8) konzentrisch zum Absperrogan (5) angeordnet ist und sich einerseits am Gehäuseboden (9) und andererseits auf einem Bund (10) abstützt und dieser Bund (10) gleichzeitig als Hubbegrenzung für das Absperrorgan (5) dient.

3. Systemtrenner nach Anspruch 1 und 2, **dadurch gekennzeichnet, dass** eine Verbindungsstange (19) das rohrförmige Absperrorgan (5') mit einem Anzeigeteller (21) verbindet und diese Verbindungsstange (19) dichtend durch das Gehäuse (1) geführt ist.

4. Systemtrenner nach Anspruch 3, **dadurch gekennzeichnet, dass** der Durchmesser (S) eines Ventilsitzes (6) des Ablassventils größer als der Durchmesser (D) des Entlastungskolbens (7) gewählt ist und nach der Formel $S = \sqrt{d^2+D^2}$ bestimmt wird, wobei (d) dem Durchmesser der Verbindungsstange (19) entspricht.

5. Systemtrenner mit drei in einem Gehäuse (1) in Fließrichtung druckreduzierten Zonen, wobei eine Mitteldruckzone (3) zu einer Eingangsdruckzone (2) und zu einer Ausgangsdruckzone (4) durch Rückflußverhinderer (11, 17) abgegrenzt und durch ein von der Druckdifferenz zwischen Eingangs und Mittelkammerdruck gesteuertes Ablassventil (5",6', 7') entleert und belüftet wird, ein rohrförmig ausgebildetes Absperrorgan (5") des Ablassventils (5",6', 7') in einem Durchbruch in einer die Trennung zwischen Eingangs- und Mitteldruckzone bildenden Gehäusewand (13) axial verschiebbar angeordnet ist und die zum Eingangsdruck weisende Stirnseite des rohrförmigen Absperrorgans (5") durch einen mit einer Feder (12) vorgespannten Rückflußverhinderer (11) verschlossen und in Fließrichtung dahinter mit radialen Durchbrüchen (16) versehen ist, **dadurch gekennzeichnet, dass** das rohrförmige Absperrorgan (5") durch einen Entlastungskolben (7') des Ablassventils dichtend geführt ist, wobei dieser Entlastungskolben in dem rohrförmigen Absperrorgan (5") in Fließrichtung hinter den radialen Durchbrüchen (16) angeordnet ist und gleichzeitig zur Druckentlastung des Ablassventils (5",6',7') dient, das Absperrorgan (5") radial dichtend in den Ventilsitz (6') des Ablassventils eintaucht und der Durchmesser (S') des Ventilsitzes (6') wesentlich kleiner als der Durchmesser (W) des Durchbruches in der Gehäusewand (13) ist, und das Absperrorgan (5") durch den Durchbruch in der Gehäusewand geführt ist

6. Systemtrenner nach Anspruch 5, **dadurch gekennzeichnet, dass** der Entlastungskolben (7') axial beweglich ist und eine Druckfeder (23) vorspannt und nach Überschreiten eines vorbestimmten Mittelkammerdruckes in seinem Hub durch einen Anschlag (24) begrenzt ist.

## Claims

1. System separator with three zones which are pressure-reduced in the flow direction in a housing (1), an intermediate pressure zone (3) being delimited from an inlet pressure zone (2) and from an outlet pressure zone (4) by non-return valves (11, 17) and being emptied and ventilated by a drain valve (5, 5', 6, 7) controlled by the pressure difference between inlet and intermediate chamber pressure, a shut-off element (5, 5') of tubular design of the drain valve (5, 5', 6, 7) being arranged axially displaceably in an opening in a housing wall (13) forming the separation between inlet pressure zone and intermediate pressure zone, and that end side of the tubular shut-off element (5, 5') facing the inlet pressure being closed by a non-return valve (11) preloaded with a spring (12) and being provided therebehind in the flow direction with radial openings (16), **characterized in that** the tubular shut-off element (5, 5') is guided sealingly by a relief piston (7) of the drain valve (5, 5', 6, 7), which piston is fixed in relation to the housing bottom (9), this piston being arranged in the tubular shut-off element (5, 5') behind the radial openings (16) in the flow direction and at the same time serving for pressure relief of the drain valve (5, 5', 6, 7).

2. System separator according to Claim 1, **characterized in that** the setpoint spring (8) is arranged concentrically with the shut-off element (5) and is supported on the one hand on the housing bottom (9) and on the other hand on a collar (10) and this collar (10) at the same time serves as a travel limit for the shut-off element (5).

3. System separator according to Claim 1 and 2, **characterized in that** a connecting rod (19) connects the tubular shut-off element (5') to an indicating disc (21) and this connecting rod (19) is guided sealingly through the housing (1).

4. System separator according to Claim 3, **characterized in that** the diameter (S) of a valve seat (6) of the drain valve is selected to be greater than the diameter (D) of the relief piston (7) and is determined according to the formula $S = \sqrt{d2 + D2}$,

where (d) corresponds to the diameter of the connecting rod (19).

5. System separator with three zones which are pressure-reduced in the flow direction in a housing (1), an intermediate pressure zone (3) being delimited from an inlet pressure zone (2) and from an outlet pressure zone (4) by non-return valves (11, 17) and being emptied and ventilated by a drain valve (5'', 6', 7') controlled by the pressure difference between inlet and intermediate chamber pressure, a shut-off element (5' ') of tubular design of the drain valve (5' ', 6, 7') being arranged axially displaceably in an opening in a housing wall (13) forming the separation between inlet pressure zone and intermediate pressure zone, and that end side of the tubular shut-off element (5'') facing the inlet pressure being closed by a non-return valve (11) preloaded with a spring (12) and being provided therebehind in the flow direction with radial openings (16), **characterized in that** the tubular shut-off element (5'') is guided sealingly by a relief piston (7') of the drain valve, this relief piston being arranged in the tubular shut-off element (5' ') behind the radial openings (16) in the flow direction and at the same time serving for pressure relief of the drain valve (5' ', 6, 7'), the shut-off element (5' ') extending radially sealingly into the valve seat (6') of the drain valve, and the diameter (S') of the valve seat (6') being considerably smaller than the diameter (w) of the opening in the housing wall (13), and the shut-off element (5'') being guided through the opening in the housing wall.

6. System separator according to Claim 5, **characterized in that** the relief piston (7') is axially movable and preloads a compression spring (23) and is limited in its travel by a stop (24) after a predetermined intermediate chamber pressure has been exceeded.

**Revendications**

1. Dispositif anti-retour comprenant trois zones de pression réduite dans la direction du flux dans un boîtier (1), une zone de pression centrale (3) étant séparée d'une zone de pression d'entrée (2) et d'une zone de pression de sortie (4) par des dispositifs empêchant le reflux (11, 17), et étant vidée et ventilée par une soupape de vidange (5, 5', 6, 7) commandée par la différence de pression entre la pression d'entrée et la pression de la chambre centrale, un organe d'arrêt de forme tubulaire (5, 5') de la soupape de vidange (5, 5', 6, 7) étant disposé de manière à pouvoir coulisser axialement dans une ouverture dans une paroi du boîtier (13) formant la séparation entre la zone de pression d'entrée et la zone de pression centrale et le côté frontal de l'organe d'arrêt de forme tubulaire (5, 5') tourné vers la pression d'entrée étant fermé par un dispositif empêchant le reflux (11), précontraint par un ressort (12), et étant pourvu, derrière celui-ci dans la direction du flux, d'ouvertures radiales (16), **caractérisé en ce que** l'organe d'arrêt de forme tubulaire (5, 5') est guidé de manière hermétique par un piston de décharge (7) de la soupape de vidange (5, 5', 6, 7) fixe par rapport au fond du boîtier (9), ce piston étant disposé dans l'organe d'arrêt de forme tubulaire (5, 5') dans la direction du flux derrière les ouvertures radiales (16) et servant simultanément à la décharge de pression de la soupape de vidange (5, 5', 6, 7).

2. Dispositif anti-retour selon la revendication 1, **caractérisé en ce que** le ressort de valeur de consigne (8) est disposé concentriquement à l'organe d'arrêt (5) et s'appuie d'une part sur le fond du boîtier (9) et d'autre part sur un épaulement (10), et épaulement (10) servant simultanément de limitation de course pour l'organe d'arrêt (5).

3. Dispositif anti-retour selon la revendication 1 et 2, **caractérisé en ce qu'**une tige de liaison (19) relie l'organe d'arrêt de forme tubulaire (5') à un disque d'affichage (21) et cette tige de liaison (19) est guidée hermétiquement à travers le boîtier (1).

4. Dispositif anti-retour selon la revendication 3, **caractérisé en ce que** le diamètre (S) d'un siège de soupape (6) de la soupape de vidange est choisi supérieur au diamètre (D) du piston de décharge (7) et est défini conformément à la formule $s = \sqrt{d^2 + D^2}$, (d) correspondant au diamètre de la tige de liaison (19).

5. Dispositif anti-retour comprenant trois zones de pression réduite dans la direction du flux dans un boîtier (1), une zone de pression centrale (3) étant séparée d'une zone de pression d'entrée (2) et d'une zone de pression de sortie (4) par des dispositifs empêchant le reflux (11, 17), et étant vidée et ventilée par une soupape de vidange (5'', 6, 7) commandée par la différence de pression entre la pression d'entrée et la pression de la chambre centrale, un organe d'arrêt de forme tubulaire (5'') de la soupape de vidange (5'', 6, 7) étant disposé de manière à pouvoir coulisser axialement dans une ouverture dans une paroi du boîtier (13) formant la séparation entre la zone de pression d'entrée et la zone de pression centrale et le côté frontal de l'organe d'arrêt de forme tubulaire (5'') tourné vers la pression d'entrée étant fermé par un dispositif empêchant le reflux (11), précontraint par un ressort (12), et étant pourvu, derrière celui-ci dans la direction du flux, d'ouvertures radiales (16), **caractérisé en ce que** l'organe d'arrêt de forme tubulaire (5") est guidé de manière hermétique par un piston de décharge (7') de la soupape de vidange, ce piston de décharge étant disposé dans l'organe d'arrêt de forme tubulaire (5") dans la direction du flux derrière les ouvertures radiales (16) et servant simultanément à la décharge de pression de la soupape de vidange (5", 6', 7'), l'organe d'arrêt (5") plonge radialement de manière hermétique dans le siège de soupape (6') de la soupape de vidange et le diamètre (S') du siège de soupape (6') est substantiellement plus petit que le diamètre (W) de l'ouverture dans la paroi du boîtier (13), et l'organe d'arrêt (5") est guidé à travers l'ouverture dans la paroi du boîtier.

6. Dispositif anti-retour selon la revendication 5, **caractérisé en ce que** le piston de décharge (7') est déplaçable axialement et précontraint un ressort de pression (23) et après le dépassement d'une pression dans la chambre centrale prédéterminée, est limité dans sa course par une butée (24).

Fig. 1

Fig. 2

Fig. 3